# EUROPEAN PATENT APPLICATION

(11) **EP 4 693 830 A1**
(43) Date of publication of application: **11.02.2026**
(21) Application number: 24777598.4
(22) Date of filing: 28.02.2024
(51) Int. Cl.: H02K 1/20, H02K 9/19, H02K 5/20

(54) **ELECTRIC-MOTOR STATOR COOLING STRUCTURE AND ELECTRIC MOTOR**

(30) Priority: 31.03.2023 CN 202310336992
(71) Applicant: Wuxi InfiMotion Propulsion Technology Co., Ltd., Wuxi, Jiangsu 214181 (CN)
(72) Inventor: JIANG, Wenwen, Wuxi, Jiangsu 214181 (CN); ZONG, Zhaoke, Wuxi, Jiangsu 214181 (CN); FANG, Liang, Wuxi, Jiangsu 214181 (CN)
(74) Representative: Elzaburu S.L.P.
(86) International application number: PCT/CN2024/078941
(87) International publication number: WO 2024/198808

(57) **Abstract**

Provided in the present invention are an electric-motor stator cooling structure and an electric motor. The electric-motor stator cooling structure comprises a first sealing oil cover and a second sealing oil cover, wherein the first sealing oil cover is provided with an oil intake hole; the second sealing oil cover is provided with an oil output hole; the first sealing oil cover and the second sealing oil cover are respectively used for covering two opposite ends of a stator winding, such that the first sealing oil cover and one end face of a stator core enclose a first cavity structure, which is in communication with the oil intake hole, and the second sealing oil cover and the other end face of the stator core enclose a second cavity structure, which is in communication with the oil output hole; and a cooling-oil channel is provided inside the stator core, and is in communication with the first cavity structure and the second cavity structure. Cooling oil can sequentially pass through a head end of the stator winding, the stator core and a tail end of the stator winding, and then flows out through the oil output hole, such that an entire stator assembly can be uniformly cooled.

## Description

### Technical Field

The present invention relates to the technical field of electric motors, and more particularly, to an electric-motor stator cooling structure and an electric motor.

### Background Art

With the development of new energy vehicles, the electric motor gradually develops in the direction of small volume and high power density, which puts forward higher requirements on the heat dissipation capacity of the electric motor. There are multiple existing cooling methods for electric motors, among which the most effective is oil-immersion cooling of the stator windings. Specifically, oil covers are used to encapsulate both ends of the stator windings, forming sealed chambers that allow the ends of the stator windings to be fully immersed in cooling oil for thermal dissipation. However, the above-described cooling method can only perform heat exchange on the ends of stator windings, and there may be a case where the heat exchange is not uniform throughout the stator assembly, and the cooling effect on the stator assembly as a whole is limited.

### Summary of the Invention

The problem to be solved by the present invention is how to enable the whole stator assembly to perform effective heat exchange and uniformly cool the stator assembly.

In order to solve the above-mentioned problems, the present invention provides an electric-motor stator cooling structure including a first sealing oil cover and a second sealing oil cover, wherein the first sealing oil cover is provided with an oil intake hole; the second sealing oil cover is provided with an oil output hole; the first sealing oil cover and the second sealing oil cover are respectively used for covering two opposite ends of a stator winding, such that the first sealing oil cover and one end face of a stator core enclose a first cavity structure, which is in communication with the oil intake hole, and the second sealing oil cover and the other end face of the stator core encloses a second cavity structure, which is in communication with the oil output hole; and a cooling-oil channel is provided inside the stator core, and is in communication with the first cavity structure and the second cavity structure.

The technical effect of the present invention is that the first sealing oil cover and the second sealing oil cover may be respectively covered at opposite ends of the stator winding, such that the first sealing oil cover and one end face of the stator core enclose a first cavity structure, and one end of the stator winding is located in the first cavity structure, and the second sealing oil cover and the other end face of the stator core enclose a second cavity structure, and the other end of the stator winding is located in the second cavity structure, and the cooling-oil channel inside the stator core is in communication with the first cavity structure and the second cavity structure, so that the first cavity structure, the cooling-oil channel, and the second cavity structure may form a complete sealed cavity. When the electric motor needs to be cooled, the cooling oil can flow into the first cavity structure from the oil intake hole, then the cooling oil flows into the stator core through the cooling-oil channel, and the cooling oil can flow into the second cavity structure along the cooling-oil channel so that the cooling oil can flow out from the oil output hole after passing through the first end of the stator winding, the stator core and the tail end of the stator winding successively, thereby enabling the whole stator assembly to contact the cooling oil, i.e. the whole stator assembly can perform effective heat exchange cooling, and the stator assembly can be uniformly cooled.

Preferably, the first sealing oil cover includes a first oil cover body, a first inner ring portion and a first outer ring portion, the first inner ring portion and the first outer ring portion are respectively connected to the first oil cover body, and the first inner ring portion, the first outer ring portion and the first oil cover body form a first annular groove structure, an open end of the first annular groove structure is used to abut against an end face of the stator core so as to enclose the first cavity structure, and the second sealing oil cover includes a second oil cover body, a second inner ring portion and a second outer ring portion, wherein the second inner ring portion and the second outer ring portion are respectively connected to the second oil cover body, and the second inner ring portion, the second outer ring portion and the second oil cover body form a second annular groove structure, and an open end of the second annular groove structure is used to abut against an end face of the stator core to enclose the second cavity structure.

Preferably, the electric-motor stator cooling structure further includes a sealing ring mounted on an end face of the stator core, an end of the sealing ring facing the stator core being provided with a plurality of protruding teeth spaced apart, the plurality of protruding teeth being adapted to be inserted into a plurality of slot openings of the stator core in a one-to-one correspondence, and the sealing ring being provided between the stator core and the first inner ring portion.

Preferably, the electric-motor stator cooling structure further includes a sealing slot wedge for being provided inside the slot opening, an end of the sealing slot wedge is provided with a male stop structure, and a portion of the protruding teeth inserted into the slot opening is provided with a female stop structure, and the male stop structure is for being connected to the female stop structure.

Preferably, one end of the sealing ring facing away from the stator core is provided with a first stop structure, the first inner ring portion is provided with a second stop structure matching the first stop structure, and the second stop structure is connected to the first stop structure.

Preferably, the electric-motor stator cooling structure further includes a first sealing gasket provided at a junction of the first stop structure and the second stop structure.

Preferably, the electric-motor stator cooling structure further includes a second sealing gasket, wherein the first outer ring portion is provided with a mounting groove, and an open end of the mounting groove is adapted to abut against an end face of the stator core, and the second sealing gasket is provided in the mounting groove.

Preferably, the first outer ring portion is provided with an oil inlet groove on a side thereof facing away from the first inner ring portion, and the first outer ring portion is provided with the oil intake hole, and the oil intake hole is in communication with the oil inlet groove.

The present invention also provides an electric motor including a motor housing and an electric-motor stator cooling structure as described above, a first sealing oil cover of the electric-motor stator cooling structure is provided in the electric motor housing, the electric motor housing is provided with an oil inlet, the first sealing oil cover and a side wall of the electric motor housing enclose an oil inlet cavity structure, and the oil inlet is in communication with the oil inlet cavity structure.

The advantageous effects of the electric motor according to the present invention are the same as those of the electric-motor stator cooling structure, which will not be described in detail herein.

Preferably, the second sealing oil cover of the electric-motor stator cooling structure is provided in the electric motor housing, the electric motor housing is provided with an oil outlet cavity structure, the oil output hole of the second sealing oil cover is in communication with the oil outlet cavity structure, and the electric motor housing is provided with an oil outlet, the oil outlet is in communication with the oil outlet cavity structure.

### Brief Description of the Drawings

FIG. 1 is a schematic view showing the internal structure of an electric-motor stator cooling structure according to an embodiment of the present invention;
FIG. 2 is a partially enlarged schematic view of FIG. 1;
FIG. 3 is a schematic view showing the structure of the first sealing oil cover according to an embodiment of the present invention;
FIG. 4 is a schematic view showing the structure of the second sealing oil cover according to an embodiment of the present invention;
FIG. 5 is a schematic view showing the structure of the sealing ring according to an embodiment of the present invention;
FIG. 6 is a schematic view showing the structure of the sealing slot wedge according to an embodiment of the present invention;
FIG. 7 is a partially enlarged schematic view of the stator core according to an embodiment of the present invention; and
FIG. 8 is a schematic view showing the structure of a stator winding and a stator core according to an embodiment of the present invention.

### Description of reference numerals:

1. First sealing oil cover; 101. First oil cover body; 102. First inner ring portion; 103. First outer ring portion; 1031. mounting groove; 104. First annular groove structure; 2. Second sealing oil cover; 201. Second oil cover body; 202. Second inner ring portion; 203. Second outer ring portion; 3. Oil intake hole; 4. Oil output hole; 5. Stator winding; 6. Stator core; 7. First cavity structure; 8. Second cavity structure; 9. Cooling-oil channel; 10. Sealing ring; 11. Protruding teeth; 111. Female stop structure; 12. Slot opening; 13. Sealing slot wedge; 131. Male stop structure; 14. First stop structure; 15. Second stop structure; 16. First sealing gasket; 17. Second sealing gasket; 19. Oil inlet groove; 20. Electric motor housing; 21. Oil inlet; 22. Oil inlet cavity structure; 23. Oil outlet cavity structure; 24. Oil outlet.

### Detailed Description of the Invention

In order that the above-described objects, features, and advantages of the present invention are attained and can be understood in detail, a more particular description of embodiments of the invention, briefly summarized above, may be had by reference to the appended drawings.

It is noted that the terms "first", "second", and the like in the description and the claims of the present invention and in the above-described drawings, are used for distinguishing between similar objects and not necessarily for describing a particular sequential or chronological order. It is to be understood that the data so used are interchangeable under appropriate circumstances such that the embodiments of the invention described herein are capable of operation in sequences other than those illustrated or otherwise described herein.

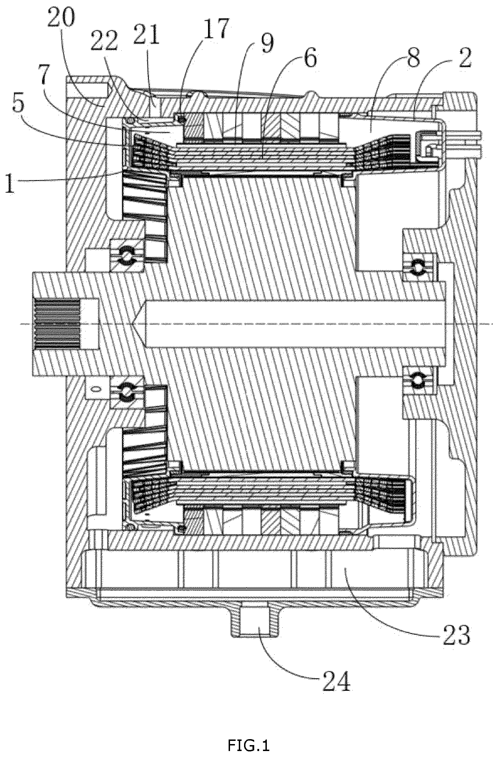

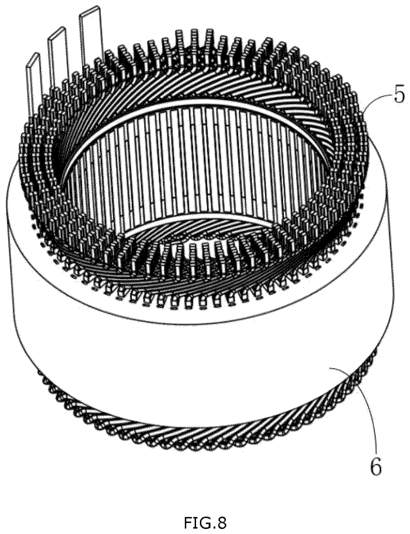

With reference to FIGs. 1, 3, 4 and 8, an electric-motor stator cooling structure according to an embodiment of the present invention includes a first sealing oil cover 1 and a second sealing oil cover 2, wherein the first sealing oil cover 1 is provided with an oil intake hole 3; the second sealing oil cover 2 is provided with an oil output hole 4; the first sealing oil cover 1 and the second sealing oil cover 2 are respectively used for covering two opposite ends of a stator winding 5, such that the first sealing oil cover 1 and one end face of a stator core 6 enclose a first cavity structure 7, the first cavity structure 7 is in communication with the oil intake hole 3, and the second sealing oil cover 2 and the other end face of the stator core 6 enclose a second cavity structure 8, the second cavity structure 8 is in communication with the oil output hole 4; and a cooling-oil channel 9 is provided inside the stator core 6, and the cooling-oil channel 9 is in communication with the first cavity structure 7 and the second cavity structure 8.

Specifically, the electric-motor stator cooling structure may include a first sealing oil cover 1, which may be provided with an oil intake hole 3, and a second sealing oil cover 2, which may be provided with an oil output hole **4. In** the present embodiment, the first sealing oil cover 1 may be covered at one end of the stator winding 5, that is, one end of the stator winding 5 is located inside the first sealing oil cover 1, so that the first sealing oil cover 1 and one end face of the stator core 6 enclose the first cavity structure 7, and one end of the stator winding 5 is located inside the first cavity structure 7, and the oil intake hole 3 may be in communication with the first cavity structure 7.

Similarly, the second sealing oil cover 2 may be covered on the other end of the stator winding 5, that is, the other end of the stator winding 5 is located inside the second sealing oil cover 2, so that the second sealing oil cover 2 and the other end face of the stator core 6 may enclose the second cavity structure 8, and the other end of the stator winding 5 is located inside the second cavity structure 8, and the oil output hole 4 may be in communication with the second cavity structure 8. The inside of the stator core 6 may be provided with a cooling-oil channel 9, and in this embodiment, the stator core 6 is provided with a plurality of cooling-oil channels 9, and the plurality of cooling-oil channels 9 are arranged at intervals along the circumferential direction of the stator core 6, the cooling-oil channels 9 are arranged to extend in the axial direction of the stator core 6, and the cooling-oil channels 9 may be in communication with the first cavity structure 7 and the second cavity structure 8.

When the electric motor needs to be cooled, the cooling oil can flow into the first cavity structure 7 from the oil intake hole 3, then the cooling oil flows into the stator core 6 through the cooling-oil channel 9, and the cooling oil can flow into the second cavity structure 8 along the cooling-oil channel 9 so that the cooling oil can flow out from the oil output hole 4 after passing through the head end of the stator winding 5, the stator core 6 and the tail end of the stator winding 5 successively, thereby enabling the whole stator assembly to contact the cooling oil, i.e. the whole stator assembly can perform effective heat exchange cooling, and the stator assembly can be uniformly cooled.

Referring to FIGs. 1, 3 and 4, in some embodiments, the first sealing oil cover 1 includes a first oil cover body 101, a first inner ring portion 102 and a first outer ring portion 103, the first inner ring portion 102 and the first outer ring portion 103 are respectively connected to the first oil cover body 101, and the first inner ring portion 102, the first outer ring portion 103 and the first oil cover body 101 form a first annular groove structure 104, an open end of the first annular groove structure 104 is used to abut against an end face of the stator core 6 so as to enclose the first cavity structure 7, and the second sealing oil cover 2 includes a second oil cover body 201, a second inner ring portion 202 and a second outer ring portion 203, wherein the second inner ring portion 202 and the second outer ring portion 203 are respectively connected to the second oil cover body 201, and the second inner ring portion 202, the second outer ring portion 203 and the second oil cover body 201 form a second annular groove structure, and an open end of the second annular groove structure is used to abut against an end face of the stator core 6 to enclose the second cavity structure 8.

Specifically, the first sealing oil cover 1 may include a first oil cover body 101, a first inner ring portion 102, and a first outer ring portion 103, wherein the first oil cover body 101 is shaped as an annular structure, the first inner ring portion 102 may be connected to an inner ring edge of the first oil cover body 101, the first outer ring portion 103 may be connected to an outer ring edge of the first oil cover body 101, and the first inner ring portion 102 and the first outer ring portion 103 are both located on the same side of the first oil cover body 101 so that the first oil cover body 101. The first inner ring portion 102 and the first outer ring portion 103 may form a first annular groove structure 104, the first outer ring portion 103 is provided with an oil intake hole3, and a plurality of oil intake holes 3 may be provided at intervals along the circumferential direction of the first outer ring portion 103.

The first annular groove structure 104 can match the annular structure formed by the end coils of the stator winding 5 so that the first annular groove structure 104 can cover an end of the stator winding 5 and wrap the end coils of the stator winding 5; the open end of the first annular groove structure 104 can abut against the end face of the stator core 6; in the present embodiment, the end of the first outer ring portion 103 away from the first oil cover body 101 bears against the end face of the stator core 6; and the end of the first inner ring portion 102 away from the first oil cover body 101 is connected to the stator core 6 via a sealing member to form a sealing structure. Thus enclosing the first cavity structure 7, cooling oil can flow within the first annular groove structure 104 to cool an end of the stator winding 5.

In some embodiments, one end of the first outer ring portion 103 remotes from the first oil cover body 101 may be provided with a snap-fit structure, wherein the snap-fit structure includes a plurality of snap-fits, and the plurality of snap-fits are arranged at intervals along the circumferential direction of the first outer ring portion 103; the stator core 6 may be provided with a snap-fit groove structure; and when the first outer ring portion 103 abuts against the stator core 6, the snap-fit structure may be inserted into the snap-fit groove structure, so that the first outer ring portion 103 and the stator core 6 are connected more firmly.

Similarly, the second sealing oil cover 2 may include a second oil cover body 201, a second inner ring portion 202, and a second outer ring portion 203, wherein the shape of the second oil cover body 201 is an annular structure, the second inner ring portion 202 may be connected to an inner ring edge of the second oil cover body 201, the second outer ring portion 203 may be connected to an outer ring edge of the second oil cover body 201, and the second inner ring portion 202 and the second outer ring portion 203 are both located on the same side of the second oil cover body 201 so that the second oil cover body 201. The second inner ring portion 202 and the second outer ring portion 203 may form a second annular groove structure, the second oil cover body 201 may be provided with an oil output hole 4, and a plurality of oil output holes 4 may be provided at intervals along the circumferential direction of the second oil cover body 201.

The second annular groove structure may be covered on the other end of the stator winding 5, and the coil at the end of the stator winding 5 is wrapped around; the open end of the second annular groove structure may abut against the end face of the stator core 6; in the present embodiment, one end of the second outer ring portion 203 away from the second oil cover body 201 abuts against the end face of the stator core 6, and one end of the second inner ring portion 202 away from the second oil cover body 201 is connected to the stator core 6 via a sealing member to form a sealing structure, thereby enclosing the second cavity structure 8; and the cooling oil may flow in the second annular groove structure to cool the other end of the stator winding 5.

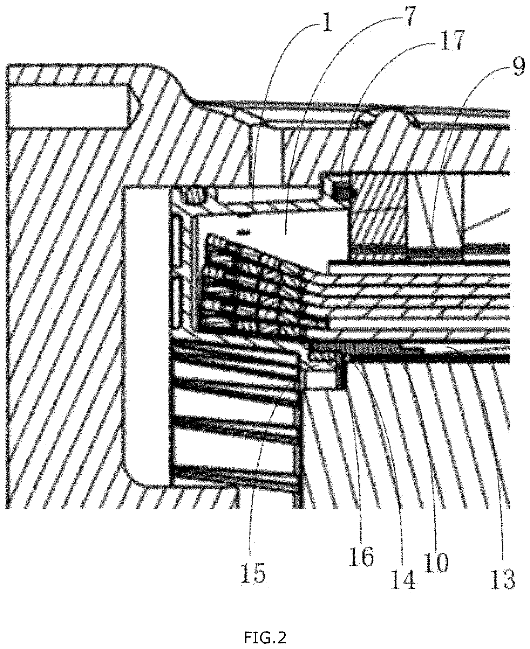

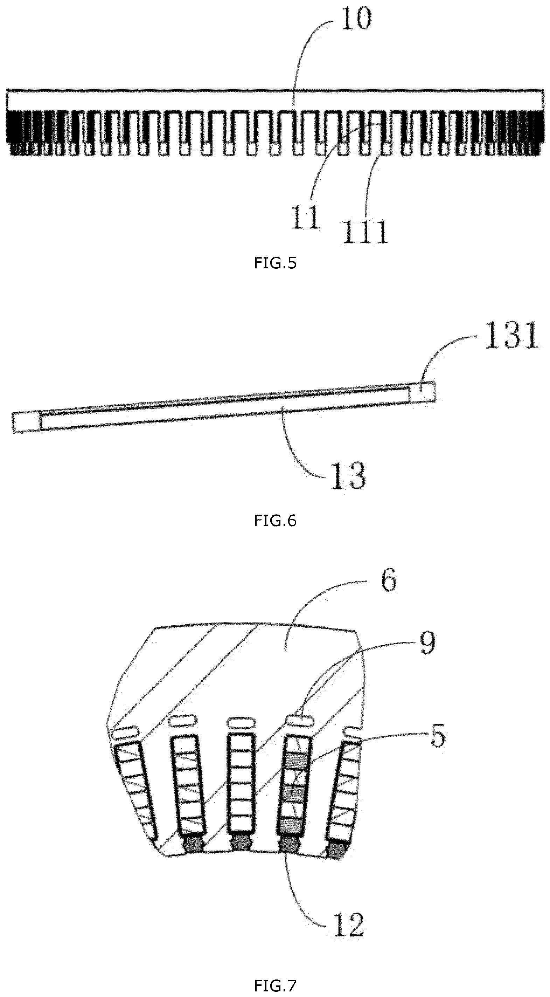

Referring to FIGs. 2, 5, and 7, in some embodiments, the electric-motor stator cooling structure further includes a sealing ring 10 mounted on an end face of the stator core 6, an end of the sealing ring 10 facing the stator core 6 being provided with a plurality of protruding teeth 11 spaced apart, the plurality of protruding teeth 11 being adapted to be inserted into a plurality of slot openings 12 of the stator core 6 in a one-to-one correspondence, and the sealing ring 10 being provided between the stator core 6 and the first inner ring portion 102.

Specifically, the electric-motor stator cooling structure may further include a sealing ring 10, wherein the sealing ring 10 may be mounted on an end face of the stator core 6, an end of the sealing ring 10 facing the stator core 6 may be provided with a plurality of protruding teeth 11 at intervals; in the present embodiment, the end face of the stator core 6 may be provided with a plurality of slot openings 12, the plurality of slot openings 12 are evenly spaced along the circumference of the stator core 6, and the plurality of protruding teeth 11 may be inserted into the plurality of slot openings 12 of the stator core 6 in a one-to-one correspondence manner so that the sealing ring 10 is firmly mounted on the end face of the stator core 6. The sealing ring 10 may be provided between the stator core 6 and the first inner ring portion 102, and the sealing ring 10 may form a sealing structure between the stator core 6 and the first inner ring portion 102, so that the sealing ring 10 may increase the sealability of the first cavity structure 7, and may prevent the cooling oil from leaking from between the first inner ring portion 102 and the stator core 6.

In the other embodiments, a sealing ring 10 may be provided between the stator core 6 and the second inner ring portion 202, and the sealing ring 10 may increase the sealability of the second cavity structure 8.

Referring to FIGs. 2, 5, and 6, in some embodiments, the electric-motor stator cooling structure further includes a sealing slot wedge 13 for being provided inside the slot opening 12, and an end of the sealing slot wedge 13 is provided with a male stop structure 131, and a portion of the protruding teeth 11 inserted into the slot opening 12 is provided with a female stop structure 111, and the male stop structure 131 is for being connected to the female stop structure 111.

Specifically, the electric-motor stator cooling structure may further include a sealing slot wedge 13, and in the present embodiment, a plurality of sealing slot wedges 13 may be provided, and the plurality of sealing slot wedges 13 may be provided inside the plurality of slot openings 12 in a one-to-one correspondence manner, and an end of the sealing slot wedge 13 may be provided with a male stop structure 131, and a part of the protruding teeth 11 inserted into the slot openings 12 may be provided with a female stop structure 111, and the male stop structure 131 may be matingly connected to the female stop structure 111. In other embodiments, the sealing slot wedge 13 may be provided with a female stop structure 111 at an end thereof, and a male stop structure 131 may be provided at a portion where the protruding teeth 11 are inserted into the slot opening 12.

The sealing slot wedge 13 itself has the function of increasing the sealability to prevent the cooling oil from leaking out of the slot opening 12, and the sealing slot wedge 13 and the protruding teeth 11 are connected by the mating of the male stop structure 131 and the female stop structure 111 to further increase the sealability to prevent the cooling oil from leaking out of the slot opening 12.

Preferably, the insulating paint can be dropped into the slot opening 12, and the space gap of the sealing slot wedge 13, the protruding teeth 11 of the sealing ring 10, and the stator core 6 can be filled with the insulating paint, so that the inside of the stator core 6 forms a sealed whole, and the cooling oil can be effectively prevented from leaking.

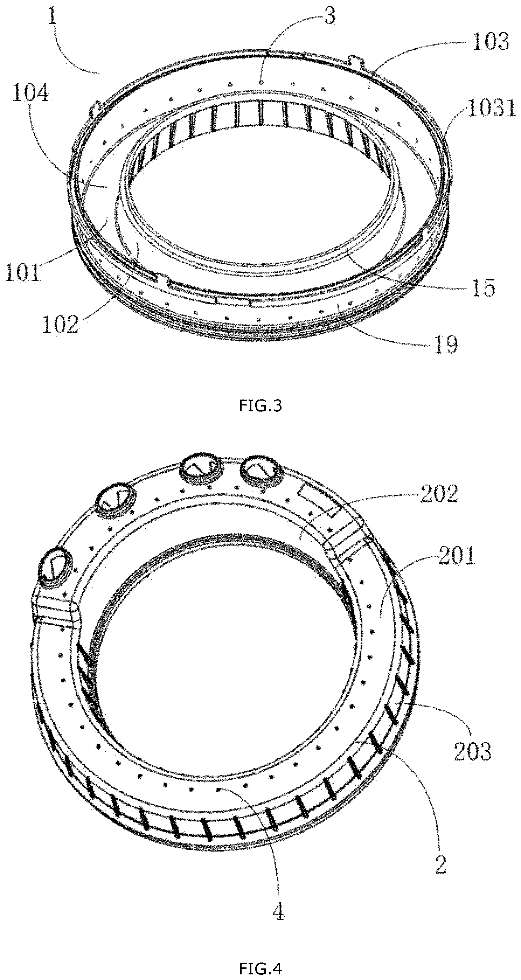

Referring to FIGs. 2 and 3, in some embodiments, the end of the sealing ring 10 facing away from the stator core 6 is provided with a first stop structure 14, and the first inner ring portion 102 is provided with a second stop structure 15 matching the first stop structure 14, and the second stop structure 15 is connected to the first stop structure 14.

Specifically, the end of the sealing ring 10 facing away from the stator core 6 may be provided with a first stop structure 14, the first stop structure 14 being provided with one turn around the circumference of the sealing ring 10, and the end of the first inner ring portion 102 facing the stator core 6 may be provided with a second stop formation 15 matching the first stop structure 14, the second stop formation 15 also being provided with one turn around the circumference of the first inner ring portion 102.

In the present embodiment, an end of the first inner ring portion 102 close to the stator core 6 is recessed in a direction facing away from the first outer ring portion 103 to form a second stop structure 15, the first stop structure 14 can cooperate with the second stop structure 15, and an end of the first stop structure 14 can abut against the first inner ring portion 102, so that the second stop structure 15 is connected to the first stop structure 14, and the sealability of the first cavity structure 7 can be further increased by providing the first stop structure 14 and the second stop structure 15.

Referring to FIG. 2, in some embodiments, the electric-motor stator cooling structure further includes a first sealing gasket 16 disposed at the junction of the first and second stop structures 14, 15.

Specifically, the electric-motor stator cooling structure may further include a first sealing gasket 16, wherein the first sealing gasket 16 may be provided at the junction of the first stop structure 14 and the second stop structure 15; in the present embodiment, the second stop structure 15 is formed by the recess of one end of the first inner ring portion 102 in a direction facing away from the first outer ring portion 103, and the distance between the second stop structure 15 and the first outer ring portion 103 is greater than the radial dimension of the stator core 6; and when the first sealing oil cover 1 is covered on the stator winding 5, the end face 102 of the first inner ring portion is in a suspended state, namely, the end face of the second stop structure 15 is in a suspended state.

In the present embodiment, the first sealing gasket 16 may be interposed between the first stop structure 14 and the second stop structure 15, and more clearly, the first sealing gasket 16 is provided between the side wall of the first stop structure 14 and the side wall of the second stop structure 15, so that the first sealing gasket 16 can increase the sealability of the junction between the first stop structure 14 and the second stop structure 15, and can further prevent the leakage of the cooling oil.

Preferably, a groove structure may be provided on a side wall of the first stop structure 14, and a protrusion structure may be provided on a side of the first sealing gasket 16 facing the first stop structure 14, and the protrusion structure may be inserted into the groove structure so that the first sealing gasket 16 may be more firmly provided at the junction of the first stop structure 14 and the second stop structure 15.

Referring to FIGs. 1 and 2, in some embodiments, the electric-motor stator cooling structure further includes a second sealing gasket 17, wherein the first outer ring portion 103 is provided with a mounting groove 1031, and an open end of the mounting groove 1031 is used to abut against an end face of the stator core 6, and the second sealing gasket 17 is provided in the mounting groove 1031.

Specifically, the electric-motor stator cooling structure may further include a second sealing gasket 17, an end of the first outer ring portion 103 facing the stator core 6 may be provided with a mounting groove 1031, and an open end of the mounting groove 1031 may abut against an end face of the stator core 6, and the second sealing gasket 17 may be provided in the mounting groove 1031, so that the second sealing gasket 17 may increase sealability between the first outer ring portion 103 and the end face of the stator core 6, and may prevent cooling oil from leaking between the first outer ring portion 103 and the stator core 6.

Referring to FIGs. 1 to 3, in some embodiments, an oil inlet groove 19 is provided on a side of the first outer ring portion 103 facing away from the first inner ring portion 102, and the first outer ring portion 103 is provided with the oil intake hole 3, which is in communication with the oil inlet groove 19.

Specifically, a side of the first outer ring portion 103 facing away from the first inner ring portion 102 may be provided with an oil inlet groove 19 which is formed by the first outer ring portion 103 being recessed in a direction close to the first inner ring portion 102, and the oil inlet groove 19 may be provided to extend in a circumferential direction of the first outer ring portion 103, the first outer ring portion 103 may be provided with an oil intake hole 3, and the oil intake hole 3 may be in communication with the oil inlet groove 19, and more clearly, a groove bottom of the oil inlet groove 19 may be provided with the oil intake hole 3, and cooling oil may first enter the oil inlet groove 19 and then flow into the first cavity structure 7 from the oil intake hole 3, so that the cooling oil may uniformly flow into the first cavity structure 7.

Referring to FIGs. 1 to 3, there is also provided a motor according to another embodiment of the present invention, which includes a motor housing 20 in which a first sealing oil cover 1 of the electric-motor stator cooling structure is provided, the electric motor housing 20 being provided with an oil inlet 21, and a motor stator cooling structure as described above, the first sealing oil cover 1 and a side wall of the electric motor housing 20 defining an oil inlet cavity structure 22, the oil inlet 21 is in communication with the oil inlet cavity structure 22.

Specifically, the electric motor may include a motor housing 20 and a motor stator cooling structure, the first sealing oil cover 1 of the electric-motor stator cooling structure may be provided inside the electric motor housing 20, and the electric motor housing 20 may be provided with an oil inlet 21, the first sealing oil cover 1 may be provided with an oil inlet groove 19, and an open end of the oil inlet groove 19 may abut against a side wall of the electric motor housing 20, so that the oil inlet groove 19 may enclose an oil inlet cavity structure 22 with the side wall of the electric motor housing 20, and the oil inlet 21 may be in communication with the oil inlet cavity structure 22.

When the electric motor needs to be cooled, the cooling oil can be pumped to the oil inlet 21 on the electric motor housing 20 via the oil pump, the cooling oil can flow into the oil inlet cavity structure 22 from the oil inlet 21, the cooling oil then flows into the first cavity structure 7 via the oil intake hole 3 to cool one end of the stator winding 5, then passes through the cooling-oil channel 9 inside the stator core 6 to perform heat exchange and dissipation on the stator core 6, and finally flows into the second cavity structure 8 to cool the other end of the stator winding 5, and the cooling oil flows out from the oil output hole 4, so that the whole stator assembly can be efficiently and thermally dissipated.

Referring to FIG. 1, in some embodiments, the second sealing oil cover 2 of the electric-motor stator cooling structure is provided in the electric motor housing 20, the electric motor housing 20 is provided with an oil outlet cavity structure 23, the oil output hole 4 of the second sealing oil cover 2 is in communication with the oil outlet cavity structure 23, and the electric motor housing 20 is provided with an oil outlet port 24, the oil outlet port 24 is in communication with the oil outlet cavity structure 23.

Specifically, the second sealing oil cover 2 of the electric-motor stator cooling structure can be provided inside the electric motor housing 20, the electric motor housing 20 can also be provided with an oil outlet cavity structure 23, the oil output hole 4 on the second sealing oil cover 2 can be in communication with the oil outlet cavity structure 23, the electric motor housing 20 can also be provided with an oil outlet 24, the oil outlet 24 can be in communication with the oil outlet cavity structure 23, the cooling oil can be collected in the oil outlet cavity structure 23 after flowing out from the second cavity structure 8, and the cooling oil can uniformly flow out from the oil outlet 24 so that the cooling oil can be conveniently collected, and after processing the cooling oil, entering the next cooling cycle, the cooling efficiency can be increased.

In some embodiments, a side surface of the second outer ring portion 203 of the second sealing oil cover 2 may be provided with a second sealing groove, an open end of the second sealing groove being arranged in the direction facing the electric motor housing 20, and the open end of the second sealing groove may abut against a side wall of the electric motor housing 20, and the electric-motor stator cooling structure may also be provided with a third sealing gasket, and the third sealing gasket may be arranged in the second sealing groove, so as to increase the sealability between the second outer ring portion 203 and the electric motor housing 20.

Similarly, a first seal groove may be provided on a side surface of the first outer ring portion 103 of the first sealing oil cover 1, and an open end of the first seal groove may be provided in the direction facing the electric motor housing 20, and the open end of the first seal groove may abut against a side wall of the electric motor housing 20, and a third sealing gasket may be provided in the first seal groove, so that the sealability between the first outer ring portion 103 and the electric motor housing 20 may be increased.

Although the present disclosure has been described above, the scope of the present disclosure is not limited thereto. It will be apparent to those skilled in the art that various modifications and variations can be made in the present invention without departing from the spirit or scope of the disclosure.

## Claims

1. An electric-motor stator cooling structure, **characterized by** comprising a first sealing oil cover (1) and a second sealing oil cover (2), wherein the first sealing oil cover (1) is provided with an oil intake hole (3); the second sealing oil cover (2) is provided with an oil output hole (4); the first sealing oil cover (1) and the second sealing oil cover (2) are respectively used for covering two opposite ends of a stator winding (5), such that the first sealing oil cover (1) and one end face of a stator core (6) enclose a first cavity structure (7), the first cavity structure (7) is in communication with the oil intake hole (3), and the second sealing oil cover (2) and the other end face of the stator core (6) enclose a second cavity structure (8), the second cavity structure (8) is in communication with the oil output hole (4); and a cooling-oil channel (9) is provided inside the stator core (6), and the cooling-oil channel (9) is in communication with the first cavity structure (7) and the second cavity structure (8).

2. The electric-motor stator cooling structure according to claim 1, **characterized in that** the first sealing oil cover (1) comprises a first oil cover body (101), a first inner ring portion (102) and a first outer ring portion (103), the first inner ring portion (102) and the first outer ring portion (103) are respectively connected to the first oil cover body (101), and the first inner ring portion (102), the first outer ring portion (103) and the first oil cover body (101) form a first annular groove structure (104), an open end of the first annular groove structure (104) is used to abut against an end face of the stator core (6) so as to enclose the first cavity structure (7), and the second sealing oil cover (2) comprises a second oil cover body (201), a second inner ring portion (202) and a second outer ring portion (203), wherein the second inner ring portion (202) and the second outer ring portion (203) are respectively connected to the second oil cover body (201), and the second inner ring portion (202), the second outer ring portion (203) and the second oil cover body (201) form a second annular groove structure, and an open end of the second annular groove structure is used to abut against an end face of the stator core (6) to enclose the second cavity structure (8).

3. The electric-motor stator cooling structure according to claim 2, **characterized by** further comprising a sealing ring (10) mounted on an end face of the stator core (6), an end of the sealing ring (10) facing the stator core (6) being provided with a plurality of protruding teeth (11) spaced apart, the plurality of protruding teeth (11) being adapted to be inserted into a plurality of slot openings (12) of the stator core (6) in a one-to-one correspondence, and the sealing ring (10) being provided between the stator core (6) and the first inner ring portion (102).

4. The electric-motor stator cooling structure according to claim 3, **characterized by** further comprising a sealing slot wedge (13) for being provided inside the slot opening (12), and an end of the sealing slot wedge (13) is provided with a male stop structure (131), and a portion of the protruding teeth (11) inserted into the slot opening (12) is provided with a female stop structure (111), and the male stop structure (131) is for being connected to the female stop structure (111).

5. The electric-motor stator cooling structure according to claim 3, **characterized in that** one end of the sealing ring (10) facing away from the stator core (6) is provided with a first stop structure (14), and the first inner ring portion (102) is provided with a second stop structure (15) matching the first stop structure (14), and the second stop structure (15) is connected to the first stop structure (14).

6. The electric-motor stator cooling structure according to claim 5, **characterized by** further comprising a first sealing gasket (16) provided at a junction of the first stop structure (14) and the second stop structure (15).

7. The electric-motor stator cooling structure according to claim 2, **characterized by** further comprising a second sealing gasket (17), wherein the first outer ring portion (103) is provided with a mounting groove (1031), and an open end of the mounting groove (1031) is adapted to abut against an end face of the stator core (6), and the second sealing gasket (17) is provided in the mounting groove (1031).

8. The electric-motor stator cooling structure according to claim 2, **characterized in that** the first outer ring portion (103) is provided with an oil inlet groove (19) on a side thereof facing away from the first inner ring portion (102), and the first outer ring portion (103) is provided with the oil intake hole (3), and the oil intake hole (3) is in communication with the oil inlet groove (19).

9. An electric motor, **characterized by** comprising a motor housing (20) and the electric-motor stator cooling structure according to any one of claims 1 to 8, wherein a first sealing oil cover (1) of the electric-motor stator cooling structure is provided in the electric motor housing (20), the electric motor housing (20) is provided with an oil inlet (21), the first sealing oil cover (1) and a side wall of the electric motor housing (20) enclose an oil inlet cavity structure (22), and the oil inlet (21) is in communication with the oil inlet cavity structure (22).

10. The electric motor according to claim 9, **characterized in that** the second sealing oil cover (2) of the electric-motor stator cooling structure is provided in the electric motor housing (20), the electric motor housing (20) is provided with an oil outlet cavity structure (23), the oil output hole (4) of the second sealing oil cover (2) is in communication with the oil outlet cavity structure (23), and the electric motor housing (20) is provided with an oil outlet (24), the oil outlet (24) is in communication with the oil outlet cavity structure (23).
